# FASCICULE DE BREVET EUROPEEN

(11) **EP 0 555 120 B1**
(45) Date de publication et mention de la délivrance du brevet: **01.05.1996**
(21) Numéro de dépôt: 93400172.8
(22) Date de dépôt: 26.01.1993
(51) Int. Cl.: A01K 63/04

(54) **Utilisation d'eaux-mères de marais salants pour la réalisation d'une composition d'eau de mer reconstituée**
Verwendung von Mutterlaugen von Salinen zur Herstellung einer wiederhergestellten Meereswasserzusammensetzung
Use of mother liquor from salt marshes to produce a reconstitued sea water composition

(30) Priorité: 07.02.1992 FR 9201410
(43) Date de publication de la demande: 11.08.1993
(73) Titulaire: COMPAGNIE DES SALINS DU MIDI ET DES SALINES DE L'EST, Société Anonyme dite, F-75008 Paris (FR)
(72) Inventeur: Beyna, Jean-Marie, F-34590 Marsillargues (FR); Dupeux, Dominique, F-34090 Montpellier (FR)
(74) Mandataire: Jolly, Jean-Pierre

(56) Documents cités:
- GB-A- 1 128 503
- US-A- 3 585 967
- DATABASE WPIL Section PQ, Week 9030, Derwent Publications Ltd., London, GB; Class P14, AN 90-227305

## Description

La présente invention concerne l'utilisation d'eaux-mères de marais salants pour la réalisation d'une composition d'eau de mer reconstituée. L'invention concerne également l'eau de mer reconstituée préparée à partir de telles eaux-mères.

Pour diverses utilisations, notamment dans le domaine de l'aquaculture et de l'élevage ou de l'entretien de poissons d'agrément ou d'autres espèces animales, dans des aquariums ou dans des parcs aquatiques de dimensions extrêmement variées, on a, de tout temps, cherché à reconstituer le milieu dans lequel vit naturellement l'espèce concernée.

Dans le cas d'animaux d'origine marine, on a ainsi proposé d'incorporer dans l'eau de départ des aquariums des compositions de divers sels minéraux - chlorures, bromures, sulfates ou autres, de divers métaux, notamment de métaux alcalins ou alcalino-terreux -, dans des proportions relatives correspondant à celles du milieu naturel de ces animaux (voir, par exemple, GB-A-1 128 503).

Dans le cas d'aquariums publics de très grandes dimensions, on a aussi envisagé d'utiliser de l'eau provenant de forages souterrains, qui présente l'avantage d'avoir une température constante et une excellente qualité optique, tout en étant dépourvue de germes pathogènes. Cependant, la salinité de ces eaux de forage est généralement faible et les proportions entre les différents éléments minéraux qu'elles contiennent varient fréquemment. Elles peuvent, en outre, contenir des composés indésirables et , si les poissons de la plupart des espèces parviennent généralement à s'adapter aux variations de composition chimique d'un tel milieu ambiant, les invertébrés, animaux inférieurs ayant des mécanismes d'osmorégulation plus rudimentaires, parviennent beaucoup plus difficilement à tolérer de telles variations. Or ces invertébrés présentent une grande importance dans les aquariums ou en aquaculture, du fait de leur beauté, de leur richesse décorative et de leur biologie.

Pour résoudre ce problème, on pourrait naturellement envisager d'avoir recours à de l'eau de mer naturelle captée et distribuée aux utilisateurs, mais une telle opération, menée à une grande échelle, serait complexe et coûteuse.

La présente invention vise à remédier à cet inconvénient en proposant une composition d'eau de mer reconstituée, qui comprenne aussi bien la plupart des sels marins présents dans l'eau de mer naturelle que les oligo-éléments caractéristiques de celle-ci.

A cet effet, l'invention propose d'avoir recours, en dehors de l'eau de dilution, uniquement à des produits d'origine marine.

Un premier objet de l'invention est par conséquent l'utilisation d'eaux-mères de marais salants pour la réalisation d'une composition d'eau de mer reconstituée.

Plus précisément, l'invention a pour objet l'incorporation, dans de l'eau douce, d'eaux-mères de marais salants et de chlorure de sodium d'origine marine (sel de mer), pour la réalisation d'une eau de mer reconstituée.

Un second objet de l'invention est constitué par une composition d'eau de mer reconstituée, caractérisée en ce qu'elle contient des eaux-mères de marais salants.

Plus précisément, la composition d'eau de mer conforme à l'invention contient, en dilution dans de l'eau douce, des eaux-mères de marais salants et du chlorure de sodium d'origine marine (sel de mer).

Avantageusement, pour 100 litres de la composition conforme à l'invention, on utilisera :
- entre 0,5 et 3 litres d'eaux-mères de marais salants,
- entre 2800 et 3000 g de chlorure de sodium d'origine marine (sel de mer),
le reste étant constitué d'eau douce de dilution.

On rappelle que les eaux mères de marais salants sont des solutions salines voisines de l'eau de mer, mais à très forte concentration de sels, en équilibre avec le sel qui se dépose par évaporation de ces solutions dans les marais salants. Une composition type de telles eaux-mères est la suivante :

| | |
|---|---|
| - Mg Cl₂ | 200 à 285 g/l, |
| - NaCl | 28 à 43 g/l, |
| - Mg SO₄ | 80 à 120 g/l, |
| - KCl | 27 à 53 g/l. |

Du fait de l'origine naturelle des constituants de la composition d'eau de mer reconstituée conforme à l'invention, celle-ci présente des caractéristiques physico-chimiques extrêmement proches de celles de l'eau de mer naturelle, et elle convient, par conséquent, particulièrement bien à une utilisation dans des aquariums, dans des parcs aquatiques ou encore en aquaculture.

En effet, non seulement elle apporte aux poissons d'origine marine des conditions de vie proches de celles de leur milieu naturel, mais elle convient particulièrement bien au développement des organismes invertébrés présents habituellement dans l'eau de mer.

C'est ce qui ressort des essais effectués par la Demanderesse, dont l'un va être décrit en détail ci-après.

### EXEMPLE

Un essai a été effectué dans un aquarium contenant un volume de 500 litres d'une composition conforme à l'invention, comprenant :
- 14 kilos de sel marin (NaCl),
- 6 litres d'eaux-mères de marais salants,
- 494 litres d'eau douce.

Le but de cet essai était de vérifier, sur une longue durée, les conditions de survie, dans cette composition, de divers animaux marins.

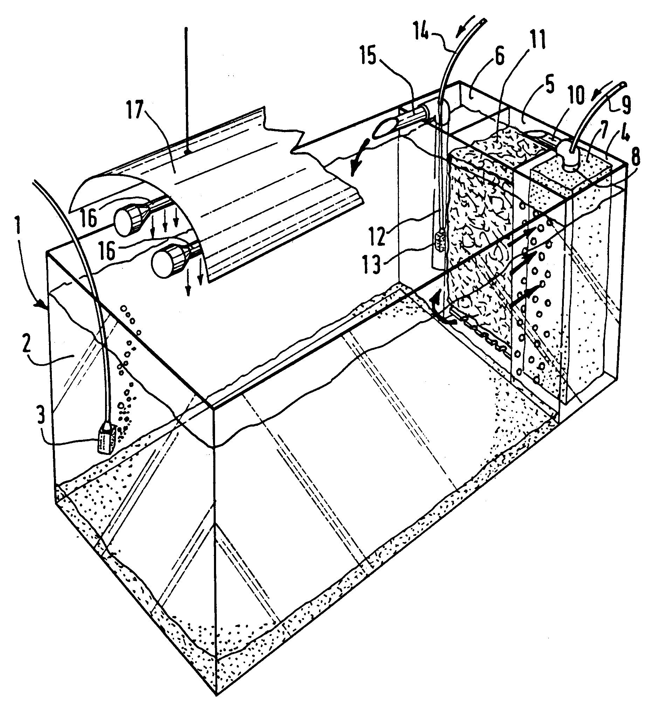

Le dispositif utilisé est représenté sur la figure unique du dessin annexé.

Il comprend un aquarium rectangulaire 1, dans le liquide 2 duquel plonge un diffuseur 3 d'air sous pression.

La circulation, le brassage et la purification du liquide sont assurés, à une extrémité de l'aquarium 3, dans des compartiments contigus 4, 5 et 6, dont l'un, 4, contient un bloc 7 d'une mousse de polyester servant de filtre mécanique, qui est percé verticalement d'un passage dans lequel est engagé un conduit vertical 8. Dans ce conduit 8 plonge un tube 9 d'amenée d'air sous pression qui se termine par un diffuseur non représenté, destiné à assurer la remontée du liquide ayant traverse le bloc de mousse 7 et le déversement de ce liquide par un coude 10 du conduit 8 dans le compartiment contigu 5. Celui-ci contient des granulés d'argile expansée, mélangés à du sable coralien grossier, l'ensemble constituant un filtre biologique 11.

Le compartiment 5 communique à sa base par des orifices avec le compartiment contigu 6, dans lequel plonge un tube vertical 12, à la base duquel est disposé, à l'intérieur, un diffuseur d'air 13, alimenté en air sous pression par un conduit 14, qui assure la remontée de l'eau purifiée et son recyclage dans l'aquarium 1, dans lequel elle est déversée par un coude 15 prévu à la partie supérieure du tube 12.

L'éclairage est assuré par deux tubes à néon 16, d'une puissance de 65 watts, disposés sous un réflecteur 17.

La température de l'eau est thermorégulée entre 19°C et 22, 5°C, par climatisation du local dans lequel est disposé l'aquarium.

Aucun dispositif de stérilisation n'est prévu, de façon à ne pas masquer un éventuel apport de germes pathogènes par l'eau-mère utilisée.

A aucun moment pendant toute la durée de l'essai, l'eau du bac n'a été renouvelée. Seuls, quelques compléments d'eau douce ont été effectués pour compenser l'évaporation de l'eau et éviter une trop forte élévation de la salinité. Celle-ci a été volontairement maintenue entre 32 et 34 ‰.

Cet essai a été effectué avec le peuplement suivant :

| - Poissons | |
|---|---|
| - Dicentrarchus labrax (loup) | 1 |
| - Labrus merula (labre merle) | 1 |

| - Invertébrés | |
|---|---|
| - Echinaster sepositus (étoile rouge) | 2 |
| - Eunicella stricta (gorgone blanche) | 1 |
| - Eunicella cavolini (gorgone jaune) | 1 |
| - Cerianthus membranaceus (cerianthe) | 2 |
| - Halocynthia papillosa (ascidie rouge) | 2 |
| - Spirographis spallanzani (spirographe) | 1 |
| - Sphaerechinus granularis (oursin violet) | 1 |
| - Abracia lixula (oursin noir) | 1 |
| - Anemonia sulcata (anémone de mer ) | 1 |
| - Parazoanthus axinellae (anémone jaune incrustée) | 1 colonie |
| - Murex brandaris (murex) | 1 |

| - Algues | |
|---|---|
| - codium tomentosum (codium) | 1 bouquet |
| - caulerpa taxifolia (caulerpe d'origine tropicale, pouvant être acclimatée en eau tempérée) | 5 plants |

Parmi ce peuplement, certaines espèces peuvent être considérées comme "rustiques" c'est-à-dire capables de s'adapter aux changements inhérents à la vie en milieu confiné (le loup, par exemple). D'autres sont plus délicates, avec un métabolisme plus rudimentaire, et sont donc beaucoup plus exigeantes quant à la composition physicochimique de l'eau (oursins, par exemple).

Une forte majorité de ce peuplement a été volontairement constituée d'animaux invertébrés, considérés comme de véritables animaux-témoins, quant à la composition physicochimique de l'eau. Les poissons, eux, jouent un rôle important et tout à fait différent : ils servent d'éventuels porteurs de symptômes pathologiques visibles, permettant d'identifier les germes pathogènes que pourrait renfermer l'eau-mère.

L'essai s'est étendu du 24 Mai 1990 au 19 Octobre 1990, soit en tout 5 mois et 25 jours.

Le 24 Mai 1990, l'aquarium, désinfecté et rincé, a été mis en service par remplissage avec de l'eau douce, soumise à une déchloration préalable de 24 heures par aération intensive, puis avec l'eau-mère et le sel marin.

Dans le compartiment 5 de filtration biologique a été introduit un milieu biologique activé issu d'une réserve où sont cultivés des bactéries nitrifiantes par apport régulier de chlorure d'ammonium, cette réserve étant exempte de germes pathogènes.

Le filtre mécanique constitué de sable coralien et de granulés d'argile expansée a été introduit également dans le compartiment 5. Un tel filtre est favorable au maintien d'un pH élevé (entre 8 et 8, 3), à la fixation des bactéries utiles et à l'implantation d'invertébrés ou d'algues.

Les poissons ont été introduits dans l'aquarium le 28 Mai 1990 et les invertébrés y ont été introduit du 29 au 31 Mai.

L'évolution des paramètres physiologiques n'a été mesurée que jusqu'au 17 Août 1990, date à laquelle la température de l'eau s'est élevée jusqu'à 23°C, du fait de la climatisation par le seul environnement. A partir de ce seuil thermique, en effet, des problèmes biologiques peuvent apparaître chez les invertébrés, qui tolèrent mal des températures trop élevées, tandis que les risques pathologiques sont accrus pour les poissons.

Le Tableau qui suit résume l'évolution des paramètres biologiques pendant cette période.

**TABLEAU**

| Période | T° (C) | S % | O₂ | pH | NH₄ + | NO₂ |
|---|---|---|---|---|---|---|
| 27 Mai | 19 | 29,9 | 85 | 8,1 | 0,04 | 0,02 |
| à | à | à | à | à | à | à |
| 31 Mai | 19,5°C | 30 % | 100 % | 8,3 | 0,1ppm | 0,05ppm |
| 31 Mai | 19,5 | 30 | 89 | 8,2 | 0,01 | 0,02 |
| à | à | à | à | à | à | à |
| 3 Juillet | 21,6°C | 34 % | 95 % | 8,45 | 0,05ppm | 0,06ppm |
| 3 Juillet | 21,6 | 32 | 80 | 8,1 | 0,01 | 0,05 |
| à | à | à | à | à | à | à |
| 17 Août | 23°C | 34 % | 90 % | 8,4 | 0,03ppm | 0,09ppm |

Le taux des nitrates, très peu recyclés du fait d'un manque de végétaux et de bactéries anaérobies dénitrifiantes, s'est élevé progressivement, pour atteindre une valeur proche de 70 ppm vers le 15 Août 1990, ce qui, pour les invertébrés, représente un seuil léthal, au-delà duquel apparaissent les premiers disfonctionnements. De ce fait, la période comprise entre le 15 Août et le 17 Octobre 1990, durant laquelle le taux de mortalité des animaux les plus fragiles a augmenté n'est pas à prendre en considération.

Les organismes vivant maintenus dans l'aquarium ont été nourri selon les modalités hebdomadaires suivantes :
- 5 jours de nourriture "consistante", à raison d'une distribution par jour (crevettes, joels et artemias adultes décongelés, nauplii d'artemia, oeufs de cabillaud et plancton) ;
- un jour de jeûne strict ;
- un jour de nourriture à l'aide de paillettes à base de spiruline.

Les observations suivantes ont été effectuées :
Le 31 Mai 1990, 3 jours après leur introduction, les poissons, malgré la peur, classique durant l'acclimatation, ont un comportement normal, de même que leur apparence extérieure. Leurs réflexes alimentaires sont conservés.

Les invertébrés sont en assez bon état général : spirographes avec panache souvent déployé, polypes des gorgones et des coraux anémone bien sortis, anémone et cérianthe bien déployés. Leur activité alimentaire est apparemment normale.

Les étoiles de mer ont un comportement normal.

Cependant, un oursin (Abracia lixura) a perdu quelques piquants, tandis que les autres piquants sont abattus. Le second, (Sphaerechinus granularis) affiche un comportement normal et commence à se camoufler en se couvrant de débris prélevés sur le substrat.

Deux ascidies rouges sont complètement rabougries, et l'une laisse échapper une substance muqueuse orangée.
Le 3 Juin 1990, les poissons ont un bon comportement, une apparence extérieure et une alimentation normales.

Parmi les invertébrés, les ascidies mortes ont été remplacées le 1er Juin par de nouveaux individus qui maintiennent une très belle apparence.

L'oursin ayant perdu des piquants semble se porter mieux.

Les autres invertébrés ont un état et un comportement satisfaisants, avec déplacements normaux, polypes déployés etc...

Les algues ont une croissance normale.

Une étoile de mer rouge, qui montrait des signes de faiblesse et adoptait des postures aberrantes dans un autre bassin, a été introduite le 1er Juin dans le bac d'expérience. Elle semble reprendre une apparence tout à fait normale dans ce bac.
Le 3 Juillet 1990, des algues vertes filamenteuses du genre Derbesia apparaissent sur le fond et sur la coquille du murex.

Pour le reste, on note un bon état général de l'ensemble des animaux.
Le 13 Juillet 1990, une étoile de mer présente des zones sclérosées, et quelques étranglements au niveau des bras, mais les autres animaux ont toujours un bon état général.

Des algues verte filamenteuses se développent sur le fond de l'aquarium de façon éparse.
Le 14 Août 1990, on note la mort d'un oursin noir, la dégénérescence de Parazoanthus axinellae, et la dégénérescence de l'algue verte filamenteuse.
Le 17 Août 1990, on constate une quasi-disparition de l'algue verte filamenteuse.

Tout au long de l'expérience, on constate donc la dégénérescence et la mort de quelques invertébrés. Plusieurs raisons peuvent être évoquées :
- un prélèvement ou une quarantaine difficile peuvent être classiquement à l'origine de mortalité chez les invertébrés ;
- certains invertébrés trouvent difficilement en captivité une source d'alimentation correspondant à leurs habitudes alimentaires naturelles (cas d'un "brouteur" tel que l'oursin).
- d'autres restent très peu tolérants vis-à-vis d'un réchauffement de l'eau, même graduel, ou vis-à-vis des nitrates, ou de tout autre produit issu de la décomposition des matières organiques.

La salinité représente enfin un paramètre primordial. Certains troubles visibles extérieurement chez les invertébrés semblent manifestement découler de problèmes d'osmorégulation, comme on l'observe souvent dans différents bassins d'exposition.

Les doses de NaCl et d'eau-mère utilisées pour reconstituer l'eau de mer portent sa salinité globale à une valeur de presque 30 ‰ . Cette salinité est faible comparée à celle du milieu naturel, et les oursins et les ascidies rouges montrent dès le départ des signes de troubles physiologiques.

L'augmentation de la salinité, dûe à l'évaporation jusqu'à des valeurs comprises entre 32 et 34 ‰, a un effet bénéfique sur ces deux espèces d'invertébrés, et les compléments d'eau douce ultérieurs ont été effectués de manière à maintenir ces valeurs.

Pour ce qui concerne les algues, aucune prolifération visible de Dunaliella n'a été observée, une algue verte filamenteuse, du genre Derbesia, est apparue en cours d'expérience.

Elle n'a visiblement pas été introduite par l'intermédiaire du peuplement, et ne figure pas dans les autres aquariums de quarantaine ou d'exposition utilisés.

Sa présence pourrait trouver son origine dans la saumure , qui serait porteuse de formes de dissémination de cette algue, mais rien ne le prouve dans cette expérience.

Malgré la dégénérescence et parfois La mort de quelques invertébrés, il a donc été observé, pour deux espèces de poissons, un comportement et un aspect extérieur tout à fait normaux et sains, et pour la majorité des invertébrés des signes de bonne santé caractéristiques : net déploiement des polypes des gorgones, des tentacules des anémones et des cérianthes, des panaches des spirographes, turgescense des ascidies, et comportements alimentaires normaux.

Aucun symptôme pathologique n'a été observé chez les poissons, malgré l'absence de dispositif de stérilisation. Aucun genre pathogène digne de ce nom ne semble contaminer l'eau-mère soumise au test.

Cet essai prouve donc l'excellente reproductibilité, grâce à l'eau de mer reconstituée conforme à l'invention, des propriétés de l'eau de mer naturelle.

## Revendications

1. Utilisation d'eaux-mères de marais salants pour la réalisation d'une composition d'eau de mer reconstituée.

2. Utilisation selon la revendication 1, caractérisée par l'incorporation dans de l'eau douce, outre d'eaux-mères de marais salants, de chlorure de sodium d'origine marine (sel de mer).

3. Composition d'eau de mer reconstituée, caractérisée en ce qu'elle contient des eaux-mères de marais salants.

4. Composition selon la revendication 3, caractérisée en ce qu'elle contient en outre du chlorure de sodium d'origine marine (sel de mer).

5. Composition selon la revendication 4, caractérisée en ce que, pour 100 litres de composition, elle comprend :
- entre 0,5 et 3 litres d'eaux-mères de marais salants,
- entre 2800 et 3000 g de chlorure de sodium d'origine marine (sel de mer),
le reste étant constitué d'eau douce de dilution.

## Claims

1. Use of ether liquors from salt marshes for the production of a reconstituted sea water composition.

2. Use according to claim 1 characterised by the incorporation of sodium chloride of marine origin (sea salt) in fresh water, besides mother liquors from salt marshes.

3. A reconstituted sea water composition characterised in that it contains mother liquors from salt marshes.

4. A composition according to claim 3 characterised in that it further contains sodium chloride of marine origin (sea salt).

5. A composition according to claim 4 characterised in that, for 100 litres of composition, it comprises:
- between 0.5 and 3 litres of mother liquors from salt marshes,
- between 2800 and 3000 g of sodium chloride of marine origin (sea salt),
the balance being formed by fresh dilution water.

## Patentansprüche

1. Verwendung von Mutterlaugen von Salinen zur Herstellung einer wieder hergestellten Meerwasserzusammensetzung.

2. Verwendung nach Anspruch 1, gekennzeichnet durch - außer der Mutterlauge von Salinen - die Zugabe von marinem Natriumchlorid (Meersalz) in das Süßwasser.

3. Zusammensetzung von wieder hergestelltem Meerwasser, dadurch gekennzeichnet, daß es Mutterlaugen von Salinen enthält.

4. Zusammensetzung nach Anspruch 3, dadurch gekennzeichnet, daß sie außerdem marines Natriumchlorid (Meersalz) enthält.

5. Zusammensetzung nach Anspruch 4, dadurch gekennzeichnet, daß sie auf 100 l enthält:
- zwischen 0,5 und 3 l Mutterlauge von Salinen,
- zwischen 2800 und 3000 g marines Natriumchlorid (Meersalz),
- der Rest wird durch Süßwasser als Verdünnung gebildet.
